# EUROPEAN PATENT APPLICATION

(11) **EP 2 549 604 A1**
(43) Date of publication of application: **23.01.2013**
(21) Application number: 11174464.5
(22) Date of filing: 19.07.2011
(51) Int. Cl.: H02G 5/06, H02B 1/20, H01H 33/24

(54) **Conductor arrangement for reducing impact of very fast transients**

(71) Applicant: ABB Technology AG, 8050 Zürich (CH)
(72) Inventor: Smajic, Jasmin, 8165 Schöfflisdorf (CH); Holaus, Walter, 8047 Zürich (CH); Seeger, Martin, 5036 Oberentfelden (CH); Greuter, Felix, 5406 Baden-Rütihof (CH); Iordanidis, Arthouros, 5400 Baden (CH); Riechert, Uwe, 8192 Glattfelden (CH)
(74) Representative: ABB Patent Attorneys

(57) **Abstract**

Conductor arrangement (100) for reducing very fast transients in high voltage applications comprising a conductor element (10, 70) having a main conducting orientation x, a conductive annular shell element (20) coaxial to the conductor element (10, 70), thus forming an annular cavity (40) around the conductor element (10, 70). The annular shell element (20) in the main conducting orientation x comprises a first end portion (22) and a second end portion (24), wherein the first end portion (22) is conductively connected to the conductor element (10, 70). The second end portion (24) comprises an annular collar (26); wherein the collar (26) is substantially coaxial to the conductor element (10, 70), thus together with the conductor element (10, 70) forming a coaxial capacitor (30) which has a solid material filling (34). The capacitor (30) comprises a surge arrester (50; 51, 52; 34) which may serve as an energy conversion portion (50).

## Description

### Field of the invention

The present invention relates to a conductor arrangement for reducing very fast transients or impact of very fast transients. In particular, the present invention relates to a conductor arrangement representing a resonant circuit for reducing very fast transients or impact of very fast transients.

### Background of the invention

Electromagnetic transients (EMTs) appear in power generation and distribution systems as an inevitable consequence of switching, faults, or any other sudden topological change of the network. These transients generally have non-harmonic time dependence which, in superposition with the harmonic nominal voltage, produces hazardous voltage peaks. The amplitude and frequency ranges of EMTs depend mainly on the rated voltage and the local network configuration. According to the existing standards for high voltage (HV) equipment, the ratio between the lightning impulse withstand voltage (LIWV) and rated voltage level decreases with higher rated voltage. As an illustration the gas insulated switchgear (GIS) standard IEC 62271-203, "High-Voltage Switchgear and Controlgear", International Electrotechnical Commission, Geneva, Switzerland, 2003 gives the following ULIWV/URATED ratios: 1050kV/245kV∼4.3, and 2500kV/100kV ∼ 2.3. At the same time, the transient voltage peaks in GIS remain 2 - 3 times higher than the rated voltage. Therefore, at a certain rated voltage level the electromagnetic transients become relevant for the dielectric design. Due to larger clearance distances, high-voltage (HV) and ultra-high-voltage (UHV) devices and components have lower lumped and distributed electric capacitances and magnetic inductances. Hence the corresponding electromagnetic transients cover higher frequencies and they are therefore called the Very Fast Transients (VFTs) or Very Fast Front Transients (VFFT). Other causes for VFTs can be faults in GIS (in the frequency range of 100kHz - 50MHz), lightning surges and faults in substations (10kHz - 3MHz), and multiple re-strikes of circuit breakers (10kHz - 1MHz). It is desired to damp the VFTs, mostly associated with the disconnector switching (multiple re-strikes and multiple pre-strikes).

Very fast transient over-voltages (VFTO, also referred to as very fast front over-voltages VFFO) are of paramount importance for the dielectric design of high voltage and ultra high voltage devices. The damping of VFTs in UHV gas insulated switchgears by using resistor-fitted disconnectors was reported in Y. Yamagata, K. Tanaka, S. Nishiwaki, "Suppression of VFT in 1100kV GIS by Adopting Resistor-fitted Disconnector", IEEE Transactions on Power Delivery, Vol. 11, No. 2, pp. 872 ― 880, 1996. The achieved damping efficiency was rather high, but this solution is very costly and makes the dielectric and mechanical design of the disconnector much more demanding. As an alternative, the VFT damping solution utilizing ferrite rings has also been analyzed and tested, as described in W. D. Liu, L. J. Jin, J. L. Qian, "Simulation Test of Suppressing VFT in GIS by Ferrite Rings", in Proceedings of 2001 International Symposium on Electrical Insulating Materials, pp. 245-247, 2001. The measurements show that the damping effect can be achieved, but with an important drawback, namely that the magnetic material goes easily into saturation, which complicates the design and reduces its generality and robustness. EP 2 234 232 A2 and the corresponding US 2010/0246085 describe a device for damping of very fast transients in GIS. One idea was to use the existing metallic shells of the GIS conductor joints in order to ignite a spark that will partially dissipate the VFT energy.

### Summary of the invention

The invention provides a conductor arrangement for reducing very fast transients and the impact of very fast transients, respectively, according to the subject matter of the independent claims. Further embodiments are incorporated in the dependent claims. According to an exemplary embodiment of the invention there is provided a conductor arrangement for reducing very fast transients in high voltage applications, wherein the conductor arrangement comprises a conductor element having a main conducting direction or orientation and a conductive annular shell element that circumferences the conductor element, thus forming an annular cavity around the conductor element, wherein the annular shell element in the main conducting orientation comprises a first end portion and a second end portion, wherein the first end portion is conductively connected to the conductor element, wherein the second end portion comprises an annular collar, wherein the collar is substantially coaxial to the conductor element, thus together with the conductor element forming a coaxial capacitor, wherein the coaxial capacitor is at least partially filled with a solid dielectric filling for increasing the capacitance of the coaxial capacitor, and wherein the capacitor comprises a surge arrester portion.

According to an exemplary embodiment of the invention there is provided a conductor arrangement for reducing very fast transients in high voltage applications, wherein the conductor arrangement comprises an annular conductor element having a main conducting direction or orientation and a conductive annular shell element, wherein the annular conductor element circumferences the conductive annular shell element, thus forming an annular cavity between the annular conductor element and the annular shell element, wherein the annular shell element in the main conducting orientation comprises a first end portion and a second end portion, wherein the first end portion is conductively connected to the annular conductor element, wherein the second end portion comprises an annular collar, wherein the collar is substantially coaxial to the conductor element, thus together with the conductor element forming a coaxial capacitor, wherein the coaxial capacitor at least partially is filled with a solid dielectric filling for increasing the capacitance of the coaxial capacitor, and wherein the capacitor comprises a surge arrester portion.

The purpose of this invention is to provide a device for damping VFTs and, as a special case of this general concept, to describe a general purpose low-quality (Q) high frequency (HF) resonator capable of receiving and dissipating the energy of VFTs in a wide frequency range. Thus, the inventive device for receiving and dissipating the VFT energy may allow for more compact and cheaper designs, and may avoid the need for damping resistors. Depending on the material used for magnetic and dielectric components like rings, this solution may be very compact and therefore applicable to any situation. Consequently, this solution is very simple, cheap, and fabrication-friendly. The resonance frequency depends on the capacitance, so that a high capacitance can be obtained by increasing the permittivity of the dielectric filling. Thus, the entire geometry may be kept small.

It should be noted that also a bended conductor element may be used which has a longitudinal direction or orientation. The surge arrester may operate as an energy converter for converting electric energy into thermal energy. Reducing very fast transients means reducing the very fast transients as such as well as reducing the impact thereof. It should be noted that the impact may also be reduced by eliminating the very fast transients. The annular shell may be made of metal. However, the shell may also be made of plastic material having a conductive coating. The annular cavity may be of a torus form, i.e. of a constant cross section along a circular, oval, elliptic or annular rounded circumference. It should be noted that the inventive conductor arrangement may also have a first conductor, e.g. an inner conductor, and a first annular shell element that circumferences the first conductor element as described above as well as a second annular shell element and a second annular conductor, e.g. an outer conductor being coaxially arranged to the first conductor, which outer conductor circumferences the second annular shell element as described above. Thus the effect of reducing impact of very fast transients may be divided among two elements. The first annular shell and the second annular shell may be shifted along the longitudinal conducting direction, so that insulation distances between the first annular shell and the second conductor, and between the second annular shell and the first conductor may be maintained. In other words, when combining a first and second shell element, those shell elements should not be positioned opposite to each other between the first and second conductor, particularly in case that the shell elements extend over the surface of the respective conductor element. Consequently all embodiments referring to the first conductor or inner conductor may be combined with embodiments referring to the second conductor or outer conductor.

The dielectric filling may be designed as an annular ring, so that according to an exemplary embodiment the cavity may be a more or less hermetically closed cavity. Thus, any dirt can be prevented from entering the cavity. Further, the cavity can be sealed in a pressure tight manner so that it is not necessary to fill insulating gas like sulfur hexafluoride (SF6) into the cavity. As the cavity is almost free of electric field, no SF6 is required inside the cavity. The cavity may also be filled with stabilizing foam so that the shape of the cavity can be maintained even if the annular shell is manufactured from a thin metal plate.

According to an exemplary embodiment of the invention, the solid dielectric filling is adapted for maintaining the capacitor geometry.

Thus the sensitive geometry or useful or critical shape of the capacitor can be maintained, in particular when mounting the conductor arrangement. The dielectric filling may serve as a centering ring so that the predetermined distance between the capacitor electrodes, i.e. the conductor surface and the collar, may be maintained. The dielectric filling may be selected or adapted such that the filled capacitor has a capacitance which is 10 to 100 times higher compared to that of a gas-filled capacitor with almost the same dimensions. The filling may be made of a filled epoxy resin. The coaxial capacitor may have a high conductivity. The high conductivity and low resistivity, respectively, may be established by the dielectric filling. The resistivity of the capacitor may be in the range of 1 to 100 Ohm, particularly 5 to 50 Ohm, and more particularly 10 to 15 Ohm.

According to an exemplary embodiment of the invention the collar comprises a first surface, wherein the conductor element comprises a conductor surface, wherein the first surface of the collar faces the conductor surface of the conductor element, wherein the conductor surface of the conductor element and the first surface of the collar are substantially parallel to each other, thus forming a cylinder capacitor.

Thus, the capacitor formed by the conductor surface of the conductor element and the corresponding facing surface of the collar of the annular shell may be considered as a cylinder capacitor which capacitor can be easily and reproducibly dimensioned. The edges of the first surface of the annular shell circumferencing the conductor may have a Rogowski-profile for reducing field strength at the edges. "Parallel" in this respect means that the longitudinal extension of the components in question are parallel.

According to an exemplary embodiment of the invention the surge arrester portion comprises a spark gap.

Thus, the overvoltage can easily be reduced. The spark gap may have electric field enhancing ridges on one or both sides of the spark gap. Thus, the locations for igniting a spark are well defined. This allows to prepare the locations with particular spark-proof material, like tungsten copper (WCu). The well defined spark gap geometry may be a circumferencing or sectional edge on either one surface or on both surfaces, the conductor surface and the facing shell surface. The well defined spark gap geometry may also be one or more punctual protrusions on either one or both surfaces.

According to an exemplary embodiment of the invention the surge arrester portion comprises an element having a conductivity characteristic with an increasing conductivity at an increasing electric field.

Thus, over-voltages automatically lead to a reduced resistivity so that the impact of VFTs may be reduced or eliminated. Further, the surge arrester may have an almost linear conductivity characteristic. The surge arrester may also have a varistor characteristic.

According to an exemplary embodiment of the invention the dielectric filling has a surge arrester characteristic having a conductivity characteristic with an increasing conductivity at an increasing electric field.

Thus, a separate surge arrester besides the dielectric filling may be avoided, as the lossy dielectric filling serves for both the surge arrester function and the capacitance increasing dielectric filling of the capacitor. The solid dielectric filling 34 may have a varistor-like characteristic or may be a varistor. The dielectric filling of the capacitor may have a significant dielectric loss, i.e. a high tan delta. The shell side surface of the capacitor may have a Rogowski-profile for avoiding an inhomogeneous electric field. It should be noted that also only a part or the entire capacitor may be filled with a dielectric filling having a conductivity characteristics with an increasing conductivity at an increasing electric field. It should be noted that the entire capacity may be filled with a dielectric filling, but only a part of it may have the above mentioned conductivity characteristics, so that the dielectric filling has different properties in different zones of the capacitor.

According to an exemplary embodiment of the invention a cross sectional profile of the annular shell element cut along the main conducting orientation has an un-branched single line profile, wherein the collar is inwardly directed so that a second surface of the collar being opposite to the first surface of the collar faces the cavity.

An un-branched single line profile may be a profile which can be continuously drawn with a pen, i.e. with no branches. In other words, the shell can be manufactured by forming a single metal sheet without welding or soldering an additional metal sheet for the collar. The shell may be made of aluminum or metal evaporated plastic. The latter may have reinforced metal sections for spark stressed portions.

According to an exemplary embodiment of the invention the first end portion is conductively connected substantially along the entire circumference of the conductor element.

Thus, the cavity may have a defined geometry and unintended sparking at the first end portion may be avoided.

According to an exemplary embodiment of the invention a cross section of the annular shell element cut along an orthogonal orientation of the main conducting orientation has a circular outer shape.

The cross section of the annular shell element cut along an orthogonal orientation y of the main conducting orientation x may also be oval or elliptical or may have a rounded outer shape.

According to an exemplary embodiment of the invention in a cross section of the conductor element cut along an orthogonal orientation of the main conducting orientation the outer contour of the conductor element may have a circular shape.

According to an exemplary embodiment of the invention in a cross section of the annular conductor element cut along an orthogonal orientation of the main conducting orientation the inner contour of the annular conductor element may have a circular shape.

The respective cross section of the conductor element, in particular annular conductor element, cut along an orthogonal orientation y of the main conducting orientation x may also be oval or elliptical or may have a rounded outer shape. According to an exemplary embodiment of the invention the conductor arrangement further comprises a magnetic element that circumferences the conductor element or inner conductor element, wherein the magnetic element is arranged within the annular cavity.

According to an exemplary embodiment of the invention the conductor arrangement further comprises a magnetic element that circumferences the conductive annular shell element, wherein the magnetic element is within the annular cavity. This embodiment is applicable for the outer conductor element.

Thus, the inductance of the cavity may be increased so that the entire geometry of the arrangement can be kept smaller or be made smaller while maintaining the resonant frequency of the arrangement.

According to an exemplary embodiment of the invention the conductor element in a surface facing a conductor counter pole comprises an annular groove, the groove being covered by the annular shell element thus forming the cavity.

The magnetic element may be located around the conductor element or inner conductor element, and the conductor element or outer conductor element may be located around the magnetic element, respectively, so that the magnetic element is located between the shell and the respective conductor element. The magnetic element may have a low saturation at nominal currents and nominal frequency, e.g. 1000A at 50Hz - 60Hz, wherein the saturation may be high or higher at frequencies of very fast transients to be expected.

The magnetic element may be located in the annular groove. Thus, the cavity can be kept large in volume or, vice versa, the outer diameter of the shell can be kept small resulting in a lower diameter of the outer tube of the grounded housing of e.g. GIS. According to an exemplary embodiment of the invention for a groove on the outer surface of the inner conductor element, the outer diameter of the conductive annular shell or shell element is equal or smaller than the outer diameter of the conductor element before and/or behind the groove. Diameter is to be understood with respect to the main conducting orientation or main axis x of the conductor arrangement.

According to an exemplary embodiment of the invention for a groove on the inner surface of the outer conductor element, the inner diameter of the conductive annular shell or shell element is equal or larger than the inner diameter of the conductor element before and/or behind the groove. Diameter is to be understood with respect to the main conducting orientation or main axis x of the conductor arrangement.

Thus, the annular shell does not extend over the surface before and behind the groove so that the isolation distance between an inner and outer conductor in a coaxial conductor arrangement may be maintained while keeping the outer dimensions of the conductor arrangement tight or small.

According to an exemplary embodiment of the invention the magnetic element along the main conducting orientation is located between the coaxial capacitor and the first end portion of the shell within the annular groove.

Thus, the magnetic element may be positioned in an almost field free space at rated voltage conditions. The magnetic element thus has a direct impact on the inductance of the cavity.

According to an exemplary embodiment of the invention the magnetic element is a magnetic core having a tubular shape in the main conducting orientation, wherein the magnetic core comprises at least one air gap with at least one directional component thereof extending into the main conducting orientation.

The magnetic material that circumferences the conductor may have a large hysteresis and high eddy current losses at VFT voltages. This may lead to a damping of the very fast transients. The material may be of a nano-crystalline material structure. The material of the magnetic ring may be ferrite. The form of the magnetic element may have an annular core shape, e.g. a tube, a tube with a slot or air gap in longitudinal orientation, a number of tube sectors together forming the magnetic element or an annular tube shape with one or more air gaps. The one or more air gaps may run in a main conducting orientation, but may also run helically.

According to an exemplary embodiment of the invention the annular cavity is at least partially coated with a lossy dielectric resistive layer.

According to an exemplary embodiment of the invention there is provided a gas insulated switchgear with the inventive conductor arrangement. According to an exemplary embodiment, the annular shell covers a joint of the conductor so that the annular shell not only serves as a cavity wall, but also as a field smoothing element for the joint. Thus, sharp edges of conductor joints may be covered by the annular shell.

It should be noted that the above features may also be combined. The combination of the above features may also lead to synergetic effects, even if not explicitly described in detail.

These and other aspects of the present invention will become apparent from and elucidated with reference to the embodiments described hereinafter.

### Brief Description of the Drawings

Exemplary embodiments of the present invention will be described in the following with reference to the following drawings.
- Fig. 1: illustrates an equivalent electric circuit diagram of a conductor arrangement according to an exemplary embodiment of the invention.
- Fig. 2: illustrates a half sectional view along the rotational axis of a device according to an exemplary embodiment of the invention, where the annular shell element circumferences an inner conductor element.
- Fig. 3: illustrates a half sectional view along the rotational axis of a device according to an exemplary embodiment of the invention, where an outer conductor element circumferences the annular shell element.
- Fig. 4: illustrates a detailed half sectional view along the rotational axis of a device according to an exemplary embodiment of the invention.
- Fig. 5: illustrates a cross sectional view along the rotational axis of a device according to an exemplary embodiment of the invention.
- Fig. 6: illustrates perspective view of a detail of a device according to an exemplary embodiment of the invention.
- Fig. 7: illustrates a cross sectional view along the rotational axis of a device according to a further exemplary embodiment of the invention, where the VFT eliminating geometry is arranged at an inner conductor.
- Fig. 8: illustrates a cross sectional view along the rotational axis of a device according to a further exemplary embodiment of the invention, where the VFT eliminating geometry is arranged at an outer conductor.

### Detailed Description of Exemplary Embodiments

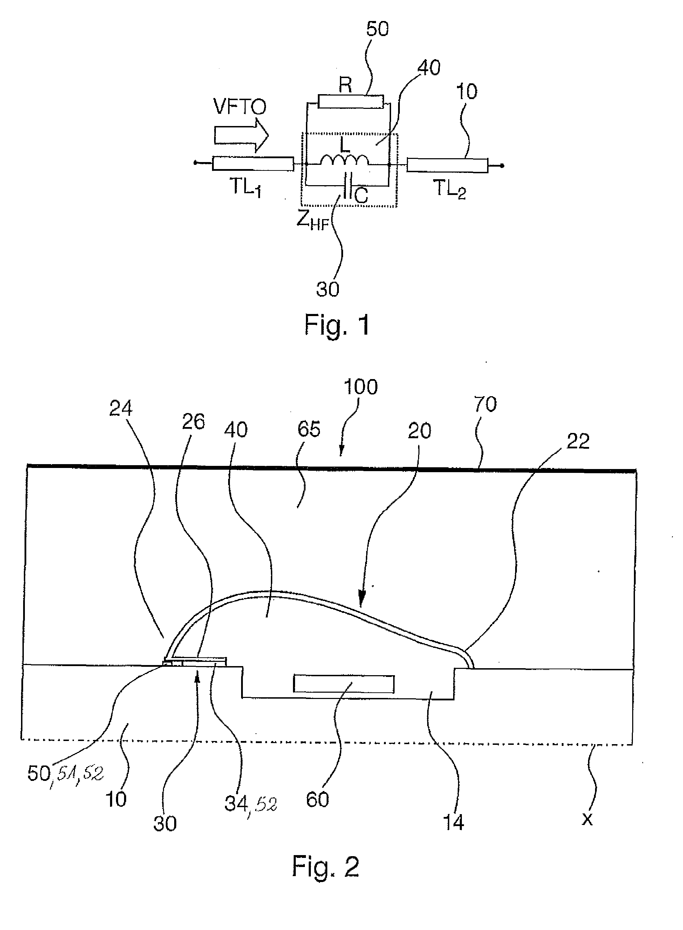

With respect to Fig. 1 the general function of damping of VFTs is explained in the following. A practical realization of the impedance ZHF is a parallel LC resonant circuit as shown in Fig. 1. A GIS conductor can be represented as a transmission line along which very fast transients travel. It is possible to interrupt the transmission line and insert a frequency-dependant impedance ZHF which has a large impedance value over a certain frequency range but almost zero impedance at 50-60 Hz. As an example of such impedance a parallel LC resonant circuit could be used. The resistor R is connected parallel to the impedance ZHF for dissipating the energy of VFTOs. Being initiated, very fast transients travel along a GIS conductor that can be understood as transmission lines TL1 and TL2. Thus, the impedance ZHF, when receiving a VFT, causes a voltage drop which results in an electric current through the resistor R and hence the dissipation of the VFT energy.

It should be noted that the cross sectional views of Fig. 2 to 5, 7 and 8 are illustrative and for sake of clarity material specific hashing and fillings in the cross sectional cut elements are left out. Figs. 2 to 5 illustrate various embodiments of conductor arrangements as disclosed herein. The conductor arrangement comprises an electrically conducting shell 20 connected to a GIS conductor 10, 70 which GIS conductor 10, 70 may have a joint (not illustrated), but may also be a joint free section of the conductor. The shell 20 may be modified so as to have a gap 50 suitable for igniting an electric spark when a VFT wave reaches the shell. The gap may at least partially be filled with a solid dielectric. Thus, the VFT energy may be partially dissipated, thus reducing the amplitudes of the VFT over-voltages. The metallic shell 20 presented in Fig. 2 to 5 together with the conductor 10, 70 may form a resonant cavity 40. Between the shell 20 and the conductor 10, 70, in particular between both sides of the spark gap 50, the electric spark is ignited due to VFTs. In addition to that, the resonant frequency of the cavity 40 may be changed or be modified by the cavity's geometrical shape in order to achieve efficient VFT damping. With respect to the equivalent circuit diagram in Fig. 1 the cavity 40 of the shell corresponds to the inductance L. The capacitor formed by the collar 26 and the conductor 10, 70 correspond to the capacitor C. The resistor R in Fig. 1 represents the loss of the capacity and the inductance and/or the low resistivity of the ignited spark gap. The capacity 30 comprises a first electrode 17, 77 (conductor surface) and second electrode 27 (collar) as well as a dielectric filling 34. The filling 34 may have a high loss factor tan delta, so that the loss component of the filling mainly corresponds to the resistor R in Fig. 1. However, also the spark gap includes a loss component, in particular when igniting. It should be noted that the resistor R in Fig. 1 may be of a non-constant type resistor. In particular, the resistor R may be of an electric field depending type, wherein the resistivity is lower at higher electric fields. A typical example is a spark gap, which gap has a high resistivity before reaching the break down field strength and has a low resistivity after reaching the break down field strength, i.e. after igniting. Thus, the inventive device allows for damping VFTs and, as a special case of this general concept, describes a general purpose low-Q HF resonator capable of receiving and dissipating the energy of VFTs in a wide frequency range. The resonator may be easily installed along any GIS conductor and may play a role for the parallel LC circuit.

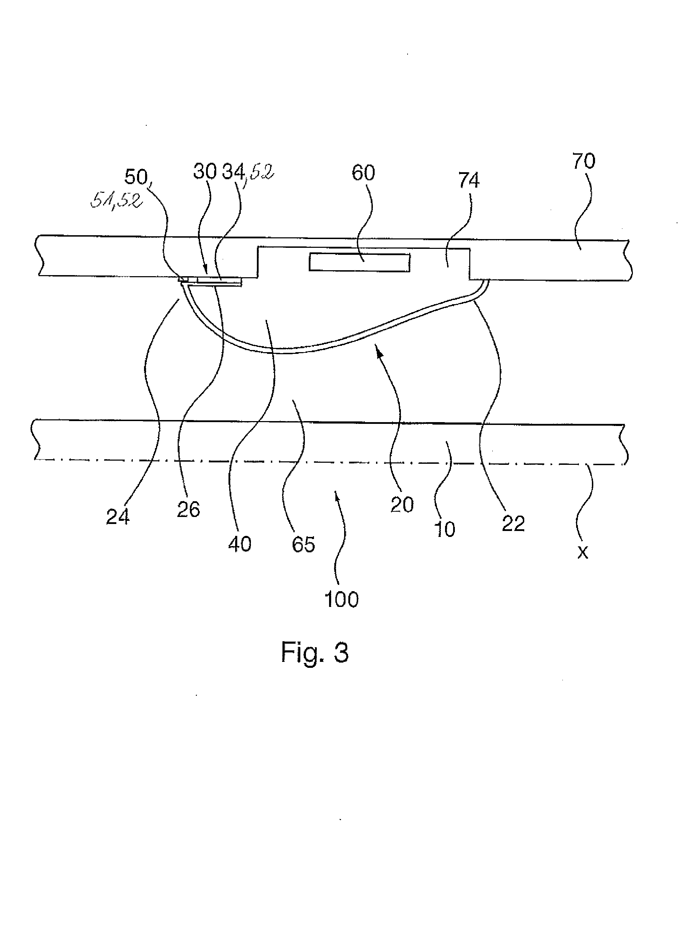

The resonator structure depicted in Fig. 2 and Fig. 3 has a simple geometry and it comprises a rounded dielectrically friendly metallic shell 20 that together with the cylindrical GIS inner conductor 10 in Fig. 2 and outer conductor 70 in Fig. 3 forms a cavity 40. The cavity may be filled with sulfur hexafluoride or any other appropriate insulating gas. The cavity may also be filled with stabilizing foam. The foam may be open cell foam or pressure resistant closed cell foam.

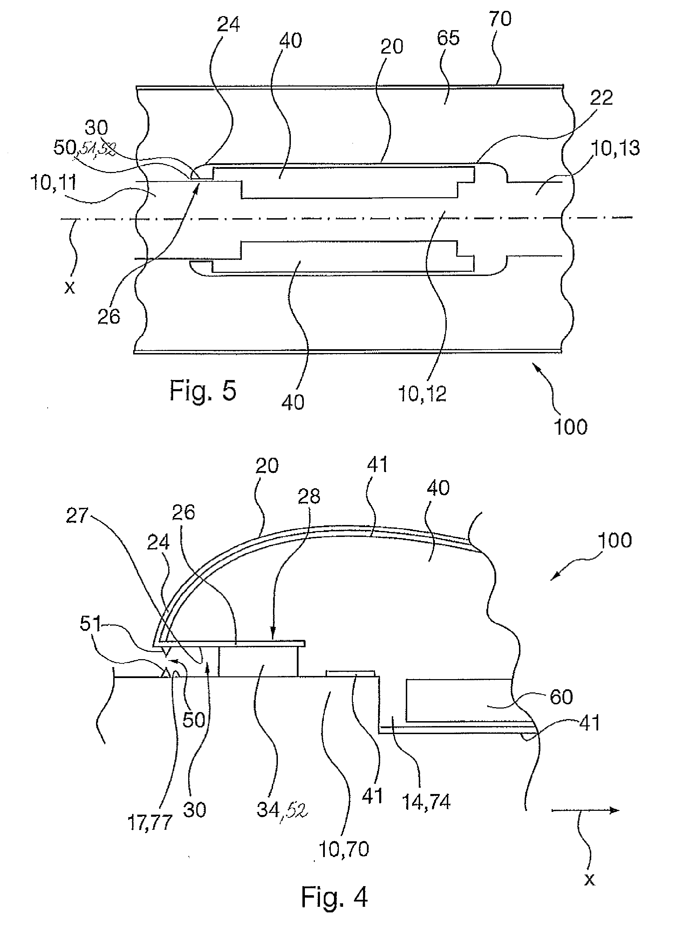

Fig. 2 illustrates a half sectional view along the rotational axis of a device 100 according to an exemplary embodiment of the invention. The device of Fig. 2 illustrates a general purpose low quality Q high frequency HF resonator capable of receiving and dissipating the energy of VFTs. The resonator comprises a metallic shell 40 that forms an insulating gas, e.g. SF6 cavity, a sparking region 50, a lossy dielectric ring 34, and lossy magnetic ring 60. Both rings, the dielectric ring 34 and the magnetic ring 60 may be made of a solid material. The sparking region may have spark tips 51 so as to have well defined locations for igniting a spark, as can be seen in Fig. 4. The coaxial capacitor 30 formed by the collar 26 and the conductor 10, 70 may have a solid dielectric filling 34. The capacitor 30 may have a surge arrester element 52 having an increased conductivity at an increased electric field. The element 52 and the filling 34 may be separate elements, in particular when the filling 34 only partially fills the capacitor 30. However, the filling 34 and the element 52 may also be one and the same element 34 or 52 having both properties, namely high permittivity and the above mentioned conducting characteristic. In the latter case a spark gap may be left out.

The dielectric ring 34 and magnetic ring 60 may be made of materials with pronounced dielectric and magnetic (hysteresis and eddy-currents) losses, respectively. The electromagnetic resonator may comprise a solid state switching element placed in the gap 50. A solid state switching element may maintain its state, whereas a spark gap returns to the non-conducting state when the voltage decreases. The conductor surface may have a groove 14 in the conductor 10 for receiving the magnetic material 60. The shell 20 has a first end 22 being connected to the conductor 10 and a second opposing end 24. The shell 20 encircles a cavity 40 and may have a tubular collar 26 at the second end 24, wherein the tubular collar 26 forms one electrode of the capacitor 30. The conductor arrangement 100 may be embedded into a GIS or gas insulated transmission line (GIL/GITL) having an outer housing 70 for receiving an insulating gas 65. As can be seen from Fig. 2, the cross section of the shell 20 is un-branched. "Un-branched" means that the cross section can be continuously drawn by a pen. In other words, the shell 20 can be formed by rolling or deep drawing without the need for welding or soldering along the circumference of the shell 20.

Fig. 3 illustrates a half sectional view along the rotational axis of a device according to an exemplary embodiment of the invention, wherein an outer conductor element circumferences the annular shell element 20. The structure is similar to that of Fig. 2, wherein the shell element 20 is not connected to the inner conductor 10 as in Fig. 2, but connected to the outer conductor 70. The conductor 70 may have a groove 74 in the conductor surface for receiving the magnetic material 60. The shell has a first end 22 being connected to the conductor 70 and a second opposing end 24. The shell may have a tubular collar 26 at the second end 24, wherein the tubular collar 26 forms one electrode of the capacitor 30. The conductor arrangement 100 may be embedded into a GIS or gas insulated line (GIL) having an inner conductor 10, wherein between the outer conductor 70 and the inner conductor 10 the space may be filled with an insulating gas 65. As can be seen from Fig. 3, the cross section of the shell 20 is un-branched like in Fig. 2.

Fig. 4 illustrates a detailed half sectional view along the rotational axis of a device according to an exemplary embodiment of the invention. Fig. 4 illustrates the conductor arrangement for an inner conductor 10 as well as for an outer conductor 70. With respect to Fig. 4, in the following, the specific purposes of the following additional features will be explained. A lossy magnetic ring 60 increases the magnetic inductance of the resonator, i.e. reduces its resonance frequency. This magnetic ring 60 may be made of a magnetic material with a pronounced hysteresis and eddy-currents losses in order to increase the resonator dissipation factor. The lossy magnetic ring 60 may be positioned in an arbitrarily shaped recess or annular groove 14, 74 in the GIS inner conductor 10 and/or outer conductor 70. The recess or annular groove 14, 74 increases the cavity volume, which serves, in particular, for increasing the resonator magnetic inductance. The size of the annular groove 14, 74 is limited by the required conductor cross-section of the conductor 10, 70 in order to avoid the overheating due to the nominal current. The elongated gap at the open end of the resonant cavity 40 may be made by bending the metallic shell 20 at its end 24 and extruding it parallel to the cylindrical conductor 10, 70, thus forming a collar 26.

This gap between a surface 17, 77 of the conductor and a surface 27 of the collar 26 defines the electric capacitance 30 of the resonator and together with the cavity 40 forming the resonator magnetic inductance defines the resonant frequency of the conductor arrangement 100. A lossy dielectric ring may 34 be placed in the gap of the resonator as a dielectric filling and plays an important role for reducing the resonator quality factor Q for dissipating the VFT energy. A suitable material for this ring may be high- epsilon dielectric material with a high level of electric losses, i.e. high electric conductivity. However, as an alternative, it may be also made of a conductor, e.g. graphite or metal foam, to achieve the resistance of at least several Ohms across the gap. A sparking region 50 is provided for igniting an arc if the gap VFT voltage is high enough. The spark gap may have enhanced portions 51 defining the igniting location of the spark. The sparking region 50 can take over the dissipative role of the conductive ring. In this case the dielectric filling 34 may be of a high-epsilon ring without electric conductivity, as the spark gap takes over the task of energy converting. However, it is also possible to provide an arc-less solution with e.g. a solid state switching device used in the gap to dissipate energy but being sufficient resistive for the transient to enter the cavity 40, e.g. a nonlinear resistive and varistor-like material 52 like a ceramic varistor or a polymer-composite with varistor-type switching characteristics. The internal metallic surfaces of the resonator may be coated with a suitable lossy dielectric-resistive layer 41 to support the absorption or damping of the transient along its way inside the cavity 40. The coating may be provided on the inner surface of the shell 20, the conductor surface of the conductor, on both or parts of it. Instead of dielectric coating of a metal shell 20, a similar effect can be obtained by manufacturing the shell element 20 of a plastic material having a suitable dielectric property and outside coating the plastic shell 20 with metal, e.g. by evaporating metal. The resonator electric capacitance 30 will be confined to the region of the gap 50, and the resonator magnetic inductance will be distributed over the cavity volume 40. By changing these two regions the resonant frequency of the resonator could be controlled. The solution may be used in GIS, bushings, gas circuit breakers, transformer-bushings, tap changers, bus bars in power electronic systems (e.g. drives, converters or similar devices), vacuum circuit breakers, etc. to efficiently block VFTs at their source. When being implemented in e.g. bushings, this solution allows a completely new concept of VFT-free GIS substations that imposes no over-voltage risk to the adjacent power transformers and other equipment. Depending on the magnetic ring 60 and dielectric ring 34 used, this solution may be very compact and therefore applicable to any situation.

Fig. 5 illustrates a cross sectional view along the rotational axis of a device according to a further exemplary embodiment of the invention. The recess 14 can be formed by considering the conductor 10 as being divided in three parts 11, 12, 13, wherein the middle part 12 has a smaller diameter than the first and third part 11, 13. The recess 14 (or middle part 12 with decreased diameter) increases the cavity volume, in particular for increasing the resonator magnetic inductance. The size of the recess 14 is limited by the required conductor cross-section of the second part 12 in order to avoid the overheating due to the nominal current. The shell 20 may have an elongated tubular form. The shell 20 together with the third portion 13 of the conductor 10 may be formed as a single piece. The conductor may have a joint (not shown) for connecting the first portion 11, the second portion 12 and the third portion 13. The joint may be provided between the first and second, between the second and third or within the second portion. The second portion 12 may have a diameter for receiving the magnetic element 60 (not shown) so that the magnetic element does not have a larger diameter than the opening of the shell 20 at the second end 24, which opening may receive the first portion 11 of the conductor 10 so as to form a cylinder capacitor 30. The filling 34 (not shown) of the capacitor 30 may also serve as a positioning element for centering the conductor 10 with respect to the shell 20. The shell-sided surface 27 and the corresponding surface 17 of the conductor may be conical so as to have a press fitting joint for reliably establishing a connection and geometry. Thus, the capacitor 30 may be conical with parallel, but conical electrodes, or tapered with tapering electrodes having a varying distance along the main conducting orientation. The conical or tapered form allows for an easy and reliably mounting while maintaining the desired geometry. The shell together with at least the third portion 13 of the conductor may be manufactured on a metal working lathe.

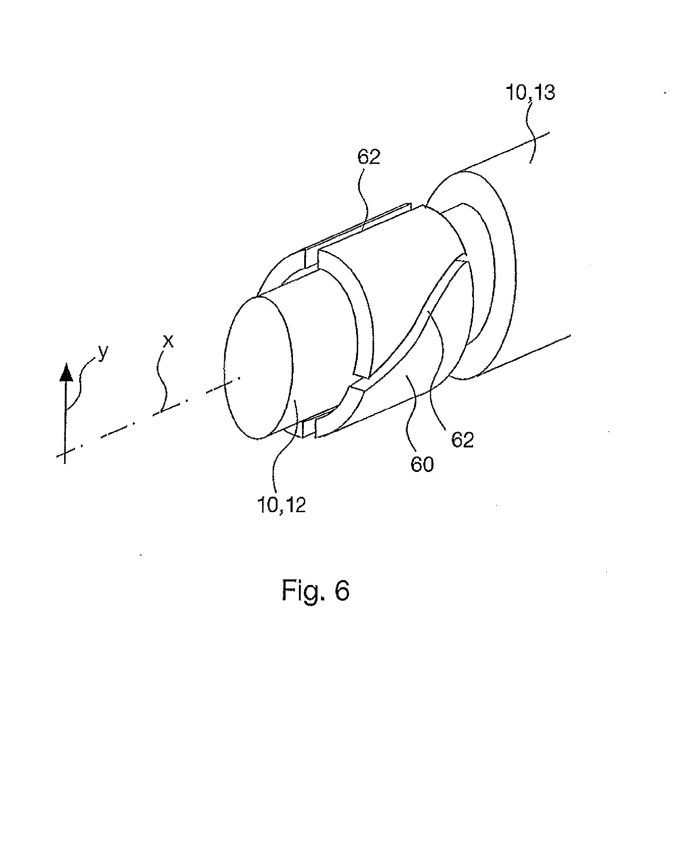

Fig. 6 illustrates a perspective view of a detail of a device according to an exemplary embodiment of the invention. The magnetic element 60 may be formed as a tubular element. The magnetic element 60 may be sectioned so as to form one or more air gaps 62. The air gaps 62 may be straight or helical. The air gaps 62 may be filled with adhesive or spacers for providing a defined dimension of the respective air gap 62.

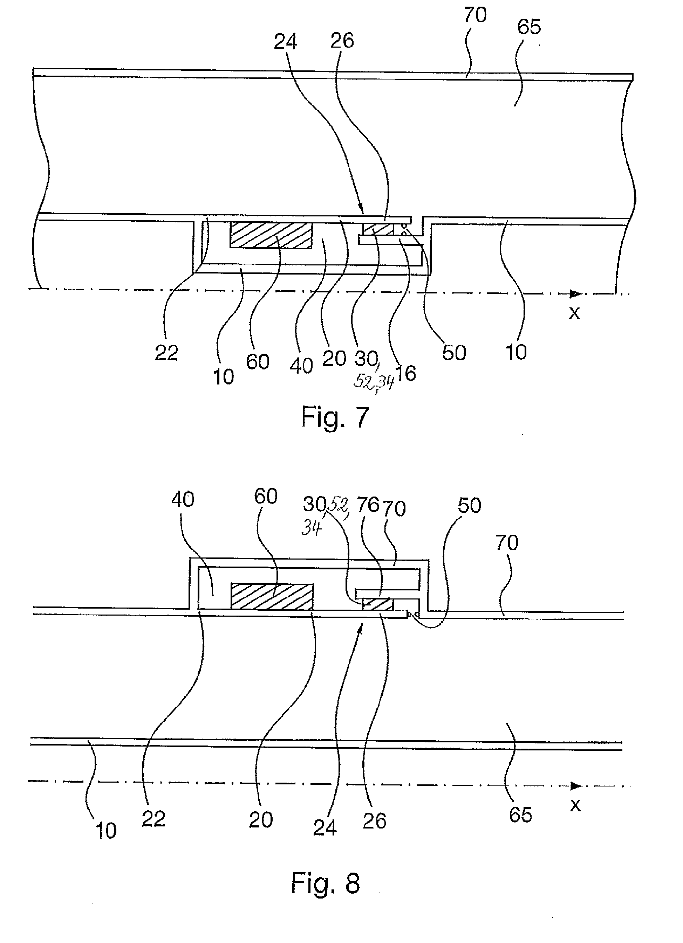

Fig. 7 illustrates a cross sectional view along the rotational axis of a device according to a further exemplary embodiment of the invention, where the VFT eliminating geometry is arranged at an inner conductor.

Fig. 8 illustrates a cross sectional view along the rotational axis of a device according to a further exemplary embodiment of the invention, where the VFT eliminating geometry is arranged at an outer conductor.

In Fig. 7 and Fig. 8 the shell element 20 does not extend over the outer diameter of the inner conductor 10 and the inner diameter of the outer conductor 70, respectively. Thus, the insulation distances may be maintained. The outer conductor element 70 in Fig. 8 in the region of the cavity has a larger outer diameter than the conductor element 70 in the region before and behind the cavity 40, as the shell 20 maintains the inner diameter of the outer conductor 70. The conductive annular shell element 20 circumferences the conductor element 10 in Fig. 7, and the conductor element 70 circumferences the shell element 20 in Fig. 8, thus in each case forming an annular cavity 40 between the conductor element 10, 70 and the annular shell 20. The annular shell element in the main conducting orientation comprises a first end portion 22 and a second end portion 24, wherein the first end portion 22 is conductively connected to the conductor element 10, 70. It should be noted that the shell 20 may also be integrally formed with the conductor 10, 70. The second end portion comprises an annular collar 26. This collar 26 in Fig. 7 and Fig. 8 is the overlapping portion overlapping a corresponding protruding element 16, 76 of the conductor. The collar 26 is substantially coaxial to the conductor element 10, 70, thus together with the conductor element 10, 70 forming a coaxial capacitor 30. The capacitor 30 comprises a surge arrester portion 50. The capacitor 30 may have a filling 34 which filling 34 may have a characteristic of a surge arrester 52. However, the surge arrester characteristic may also be established in a further element 50 besides the filling element 34. The cavity 40 may be rectangular in cross sectional shape. Although not illustrated in Fig. 7 and Fig. 8, the annular cavity 40 may be coated as described above.

It should be noted that the invention may be applied for example in GIS, GIL bushings, gas circuit breakers, transformer-bushings, tap changers, bus bars in power electronic systems (e.g. drives, converters...), vacuum circuit breakers, etc. to efficiently block VFTs at their source. The invention may be implemented in bushings, so that this solution allows to offer to customers a completely new concept of VFT-free GIS substations that imposes no over-voltage risk to the adjacent power transformers and other equipment.

It should be noted that the term 'comprising' does not exclude other elements or steps and the 'a' or 'an' does not exclude a plurality. Also elements described in association with the different embodiments may be combined.

It should be noted that the reference signs in the claims shall not be construed as limiting the scope of the claims.

## Claims

1. Conductor arrangement for reducing very fast transients in high voltage applications, the conductor arrangement (100) comprising:
a conductor element (10) having a main conducting orientation (x);
a conductive annular shell element (20) that circumferences the conductor element (10), thus forming an annular cavity (40) around the conductor element (10);
wherein the annular shell element (20) in the main conducting orientation comprises a first end portion (22) and a second end portion (24),
wherein the first end portion (22) is conductively connected to the conductor element (10);
wherein the second end portion (24) comprises an annular collar (26);
wherein the collar (26) is substantially coaxial to the conductor element (10), thus together with the conductor element (10) forming a coaxial capacitor (30);
wherein the coaxial capacitor (30) is at least partially filled with a solid dielectric filling (34) for increasing the capacitance of the coaxial capacitor (30); and
wherein the coaxial capacitor (30) comprises a surge arrester portion (50; 51, 52).

2. Conductor arrangement for reducing very fast transients in high voltage applications, the conductor arrangement (100) comprising:
a conductor element (70) having an annular shape and a main conducting orientation (x);
a conductive shell element (20) of annular shape;
wherein the conductor element (70) circumferences the conductive shell element (20), thus forming an annular cavity (40) between the conductor element (70) and the conductive shell element (20);
wherein the conductive shell element (20) in the main conducting orientation comprises a first end portion (22) and a second end portion (24),
wherein the first end portion (22) is conductively connected to the conductor element (70);
wherein the second end portion (24) comprises an annular collar (26);
wherein the collar (27) is substantially coaxial to the conductor element (70), thus together with the conductor element (70) forming a coaxial capacitor (30);
wherein the coaxial capacitor (30) is at least partially filled with a solid dielectric filling (34) for increasing the capacitance of the coaxial capacitor (30); and
wherein the coaxial capacitor (30) comprises a surge arrester portion (50; 51, 52).

3. Conductor arrangement according to any one of claims 1 and 2, wherein the solid dielectric filling (34) is adapted for maintaining a geometry of the coaxial capacitor (30).

4. Conductor arrangement according to any one of claims 1 to 3, wherein the collar (26) comprises a first surface (27), wherein the conductor element (10, 70) comprises a conductor surface (17, 77), wherein the first surface (27) of the collar (26) faces the conductor surface (17, 77) of the conductor element (10, 70), wherein the conductor surface (17, 77) of the conductor element (10, 70) and the first surface (27) of the collar (26) are substantially parallel to each other, thus forming a cylinder capacitor (30).

5. Conductor arrangement according to any one of claims 1 to 4, wherein the surge arrester portion (50) comprises a spark gap (51).

6. Conductor arrangement according to any one of claims 1 to 5, wherein the surge arrester portion (50) comprises an element (52) having a conductivity characteristic with an increasing conductivity at an increasing electric field.

7. Conductor arrangement according to any one of claims 1 to 6, wherein the dielectric filling (34) has a characteristic of a surge arrester (52) having a conductivity characteristic with an increasing conductivity at an increasing electric field.

8. Conductor arrangement according to any one of claims 1 to 7, wherein the dielectric filling (34) has a characteristic of a varistor (52).

9. Conductor arrangement according to claim 4 and according to any one of the preceding claims 1-3 and 5-8, wherein a cross sectional profile of the annular shell element (20) cut along the main conducting orientation (x) has an un-branched single line profile, wherein the collar (26) is rearwardly directed so that a second surface (28) of the collar (26) is opposite to the first surface (27) of the collar (26) facing the cavity (40).

10. Conductor arrangement according to any one of claims 1 to 9, wherein the first end portion (22) is conductively connected substantially along the entire circumference of the conductor element (10, 70).

11. Conductor arrangement according to any one of claims 1, 3-10, further comprising a magnetic element (60) that circumferences the conductor element (10), wherein the magnetic element (60) is arranged within the annular cavity (40).

12. Conductor arrangement according to any one of claims 2 to 10, further comprising a magnetic element (60) that circumferences the conductive annular shell element (20), wherein the magnetic element (60) is arranged within the annular cavity (40).

13. Conductor arrangement according to any one of claims 1 to 12, wherein the conductor element (10, 70) in a surface (17, 77) facing a counter pole (70, 10) comprises an annular groove (14, 74), the groove (14, 74) being covered by the conductive annular shell element (20) thus forming the cavity (40).

14. Conductor arrangement according to claim 13, wherein for the conductive annular shell element (20) that circumferences the conductor element (10), the outer diameter of the conductive annular shell element (20) is equal or smaller than an outer diameter of the conductor element (10) before and/or behind the annular groove (14).

15. Conductor arrangement according to claim 13, wherein for the conductor element (70) that circumferences the conductive annular shell element (20), the inner diameter of the conductive annular shell element (20) is equal or larger than an inner diameter of the conductor element (70) before and/or behind the annular groove (74).

16. Conductor arrangement according to any one of claims 13 to 15, wherein the magnetic element (60) along the main conducting orientation (x) is located between the coaxial capacitor (30) and the first end portion (22) within the annular groove (14, 74).

17. Conductor arrangement according to any one of claims 11 to 16, wherein the magnetic element (60) is a magnetic core having a tubular shape, wherein the magnetic core comprises at least one air gap (62) with at least one directional component thereof extending into the main conducting orientation (x).

18. Conductor arrangement according to any one of claims 1 to 17, wherein the annular cavity (40) is at least partially coated with a lossy dielectric resistive layer (41,42).
